(19) Europäisches Patentamt / European Patent Office / Office européen des brevets

(11) **EP 4 249 208 A1**

(12) **EUROPEAN PATENT APPLICATION**

(43) Date of publication:
27.09.2023 Bulletin 2023/39

(21) Application number: 23162817.3

(22) Date of filing: 20.03.2023

(51) International Patent Classification (IPC):
**B29C 48/32** (2019.01)      **B29C 48/30** (2019.01)
**B29C 48/09** (2019.01)      **B29C 44/20** (2006.01)
**B29C 44/34** (2006.01)

(52) Cooperative Patent Classification (CPC):
**B29C 48/09; B29C 44/507; B29C 48/3001;
B29C 48/3003; B29C 48/32;** B29C 44/3442

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022   JP 2022046328
29.11.2022   JP 2022190343**

(71) Applicant: **Ricoh Company, Ltd.
Tokyo 143-8555 (JP)**

(72) Inventors:
• **TANAKA, Takashi
Tokyo, 143-8555 (JP)**
• **HANATANI, Shinya
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(54) **FLOW PATH FORMING DEVICE AND EXTRUSION MOLDING DEVICE**

(57)      A flow path forming device including a first flow path forming member (10) and a second flow path forming member (20) that form a tubular flow path (30) through which a plastic composition is allowed to pass to mold the plastic composition. At least one of a flow path forming surface (40) of the first flow path forming member (10) and a flow path forming surface (50) of the second flow path forming member (20) has a surface roughness parameter Rk of 1.0 μm or more.

## FIG. 1

EP 4 249 208 A1

**Description**

BACKGROUND

Technical Field

The present disclosure relates to a flow path forming device and an extrusion molding device.

Related Art

Plastics are processed into various product forms and widely distributed. Further, a foam sheet made of a plastic composition has cushioning properties and contributes to cost reduction and weight reduction by reducing the usage of a resin. Thus, the foam sheet is widely used as a raw material for a manufactured product (resin molded product) such as a bag or a container, and the like. As a material for the foam sheet, for example, a thermoplastic resin such as a polystyrene resin, a polyolefin resin, or a polyester resin is used.

Further, in recent years, a development of material for replacing the raw material of the foam sheet with a biodegradable plastic that is easily decomposed in nature has been extensively progressed due to the growing awareness of the environment.

Among the biodegradable plastics, polylactic acid is a biodegradable material and has physical properties similar to those of a conventionally used plastic such as a polystyrene resin. The polylactic acid has a relatively higher melting point, toughness, chemical resistance, and the like than other biodegradable plastics. Thus, the use of the polylactic acid as a material for the foam sheet has been studied.

For the purpose of providing a plug used for a production device of a thermoplastic resin foam sheet capable of producing a polypropylene-based resin foam sheet having a low foaming ratio and a low basis weight by reducing a frictional resistance and a take-up resistance due to shrinkage of the foam sheet, a plug having the following characteristics is proposed (e.g., refer to Japanese Unexamined Patent Application Publication No 2005-246849). The plug is used for the production device of the thermoplastic resin foam sheet, which includes an extruder that melts and mixes a thermoplastic resin and a foaming agent and extrudes a molten mixture, a die that is provided to a discharge port of the extruder, and the plug that produces the thermoplastic resin foam sheet by cooling a foam intermediate extruded from the die while advancing the foam intermediate along the outer peripheral surface. A fluororesin coating layer is provided on the outer surface of the plug, which is a sheet contact surface, and the arithmetic mean roughness Ra of the fluororesin coating layer is within a range of 0.5 $\mu$m to 4 $\mu$m.

SUMMARY

An object of the present disclosure is to provide a flow path forming device capable of producing a foam sheet having a high foaming ratio and reducing an appearance defect of the foam sheet due to surface roughness.

A flow path forming device of the present disclosure as a means for solving the above-mentioned problems includes a first flow path forming member and a second flow path forming member that form a tubular flow path through which a plastic composition is allowed to pass to mold the plastic composition.

At least one of a flow path forming surface of the first flow path forming member and a flow path forming surface of the second flow path forming member has a surface roughness parameter Rk of 1.0 $\mu$m or more.

According to the present disclosure, it is possible to provide a flow path forming device capable of producing a foam sheet having a high foaming ratio and reducing an appearance defect of the foam sheet due to surface roughness.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic cross-sectional diagram illustrating a flow path forming device according to an embodiment of the present disclosure.
FIG. 2 is a schematic diagram illustrating a continuous kneading device according to an embodiment of the present disclosure.
FIG. 3 is a schematic diagram illustrating a continuous foam sheet forming device according to an embodiment of the present disclosure.
FIG. 4 is a phase diagram for defining a range of a compressible fluid.

2

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

(Flow path forming device)

A flow path forming device of the present disclosure includes a first flow path forming member and a second flow path forming member, and further includes other members as necessary.

At least one of a flow path forming surface of the first flow path forming member and a flow path forming surface of the second flow path forming member has a surface roughness parameter Rk of 1.0 $\mu$m or more.

In the conventional technique, the surface roughness Ra of the flow path of the molten resin is specified. However, even if a foam sheet is produced by adjusting the surface roughness Ra, the foaming ratio may decrease and an appearance defect due to a corrugated wrinkle may occur.

The present disclosure has paid attention to the fact that having a full control over the start of foaming is effective in reducing a corrugated wrinkle in a production device using any foaming agent.

Examples of a foaming control method include, but are not limited to, a pressure, a temperature, time, atmosphere, a foaming agent concentration, a type, dispersibility, solubility control, a filler concentration, filler dispersibility, and plastic molecular weight distribution. As a result of comprehensive and earnest examination of these conditions, it is found that using a flow path forming device having a surface roughness parameter Rk of an inner surface of a flow path in the flow path forming device of 1.0 $\mu$m or more makes it possible to produce a foam sheet that prevents both a decrease in a foaming ratio, and an appearance defect such as surface roughness due to a corrugated wrinkle.

This is because increasing a flow resistance of the plastic composition immediately before foaming makes it possible to maintain the internal pressure of the flow path forming device, thereby reducing abnormal foaming of the plastic composition. The Rk parameter indicates the height of portions of the entire cross-sectional shape, excluding extremely protruding peak portions and extremely protruding valley portions. Thus, Rk represents gaps which can be used to increase friction by a plastic composition practically entering the gaps. Further, it is speculated that, when gas derived from the foaming agent and the like enters the gaps, the force that floats the composition and the resulting friction reduction phenomenon occur at the same time. These effects are clearly indicated by Ra and other surface roughness parameters (in particular, dale void volume (Vvv) specified in JIS (Japanese Industrial Standards) B 0601:2001, reduced valley depth (Rvk) specified in ISO 25178, etc.). Thus, it is found that, in order to increase the frictional force, it is necessary to use a parameter obtained by subtracting these parameters, and, in particular, one of such a parameter Rk needs to be relatively large.

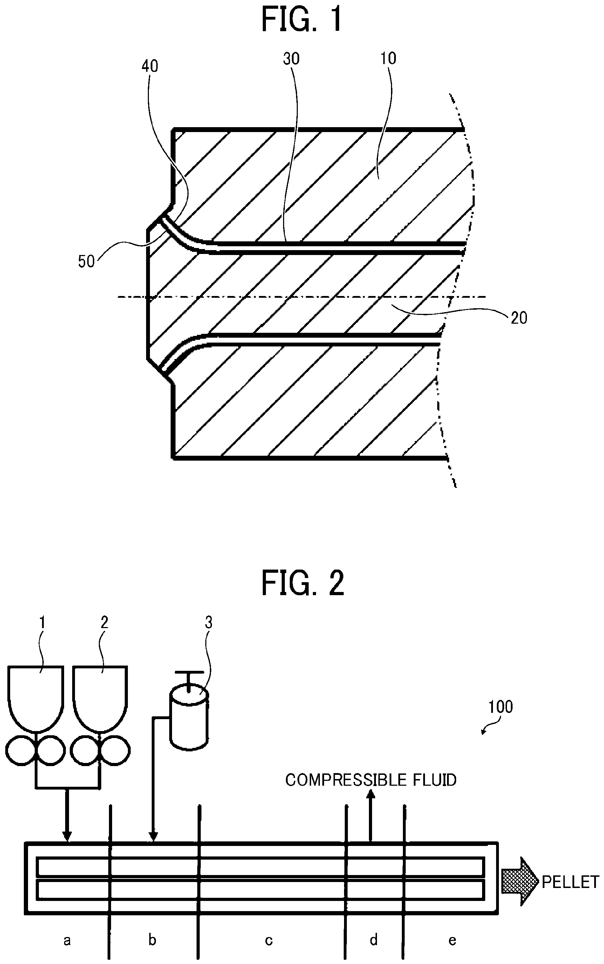

Hereinafter, the present disclosure is described in more detail with reference to an embodiment illustrated in FIG. 1. Note that the present disclosure is not limited by this embodiment.

In an example illustrated in FIG. 1, a flow path forming device of the present disclosure includes a first flow path forming member 10, a second flow path forming member 20 facing the first flow path forming member 10, and a flow path 30 formed between the first flow path forming member 10 and the second flow path forming member 20.

Allowing a plastic composition including at least one kind of plastic to pass through the flow path 30 makes it possible to mold the plastic composition.

The first flow path forming member 10 includes a flow path forming surface 40 that forms the flow path 30, and the second flow path forming member 20 includes a flow path forming surface 50 that forms the flow path 30.

The surface roughness parameter Rk of at least one of the flow path forming surface 40 and the flow path forming surface 50 is 1.0 $\mu$m or more, preferably 1.0 $\mu$m or more and 6.3 $\mu$m or less. In a case where the surface roughness parameter Rk is 1.0 $\mu$m or more, the foam sheet having a high foaming ratio can be obtained.

The surface roughness parameter Rk is an index that represents the height of portions of the entire cross-sectional shape of the surface, excluding extremely protruding peak portions and extremely protruding valley portions and is a parameter based on the JIS B 0671-2:2002 standard.

The surface roughness parameter Rpk of at least one of the flow path forming surface 40 and the flow path forming surface 50 is preferably 0.45 $\mu$m or more and 6.4 $\mu$m or less. In a case where the surface roughness parameter Rpk is 0.45 $\mu$m or more, the maximum foaming ratio of the foam sheet can be increased without causing a corrugated wrinkle. In a case where the surface roughness parameter Rpk is 6.4 $\mu$m or less, the surface of the foam sheet is less likely to be roughened or have a swirl mark.

The surface roughness parameter Rpk is an index that represents the height of the extremely protruding peaks in the cross-sectional shape of the surface and is a parameter based on the JIS B 0671-2:2002 standard.

The surface roughness parameter RSm of at least one of the flow path forming surface 40 and the flow path forming surface 50 is preferably 55 $\mu$m or more and 200 $\mu$m or less. In a case where the surface roughness parameter RSm is 55 $\mu$m or more, the maximum foaming ratio of the foam sheet can be increased without causing a corrugated wrinkle. In a case where the surface roughness parameter RSm is 200 $\mu$m or less, the surface of the foam sheet is less likely to be roughened or have a swirl mark.

The surface roughness parameter RSm is an index that represents the average length of the surface roughness profile elements and is a parameter based on the JIS B 0601:2013 standard.

It is preferable that, for the flow path forming surface 40 and the flow path forming surface 50, the surface roughness parameter Rk is 1.0 $\mu$m or more and 6.3 $\mu$m or less, and the surface roughness parameter Rpk is 0.45 $\mu$m or more and 6.4 $\mu$m or less. This can increase the maximum foaming ratio of the foam sheet without causing a corrugated wrinkle and prevent the surface of the foam sheet from becoming rough and having a swirl mark.

It is preferable that, for the flow path forming surface 40 and the flow path forming surface 50, the surface roughness parameter Rk is 1.0 $\mu$m or more and 6.3 $\mu$m or less, and the surface roughness parameter RSm is 55 $\mu$m or more and 200 $\mu$m or less. This can increase the maximum foaming ratio of the foam sheet without causing a corrugated wrinkle and prevent the surface of the foam sheet from becoming rough and having a swirl mark.

It is preferable that, for the flow path forming surface 40 and the flow path forming surface 50, the surface roughness parameter Rpk is 0.45 $\mu$m or more and 6.4 $\mu$m or less, and the surface roughness parameter RSm is 55 $\mu$m or more and 200 $\mu$m or less. This can increase the maximum foaming ratio of the foam sheet without causing a corrugated wrinkle and prevent the surface of the foam sheet from becoming rough and having a swirl mark.

It is preferable that, for the flow path forming surface 40 and the flow path forming surface 50, the surface roughness parameter Rk is 1.0 $\mu$m or more and 6.3 $\mu$m or less, the surface roughness parameter Rpk is 0.45 $\mu$m or more and 6.4 $\mu$m or less, and the surface roughness parameter RSm is 55 $\mu$m or more and 200 $\mu$m or less. This can increase the maximum foaming ratio of the foam sheet without causing a corrugated wrinkle and prevent the surface of the foam sheet from becoming rough and having a swirl mark.

The surface roughness parameter Ra of at least one of the flow path forming surface 40 and the flow path forming surface 50 is preferably 0.8 $\mu$m or more and 6.3 $\mu$m or less. In a case where the surface roughness parameter Ra is 0.8 $\mu$m or more, the maximum foaming ratio of the foam sheet can be increased without causing a corrugated wrinkle. In a case where the surface roughness parameter Ra is 6.3 $\mu$m or less, the surface of the foam sheet is less likely to be roughened or have a swirl mark.

The surface roughness parameter Ra is an index that represents the size of surface roughness and is a parameter based on the JIS B 0601:2013 standard.

A method for measuring the surface roughness parameters Rk, Rpk, RSm, and Ra is not particularly limited. For example, these parameters can be measured by using a portable roughness meter or the like such as VK-X250 manufactured by Keyence Corp. and SJ-210 manufactured by Mitutoyo Corp. Specifically, these parameters can be measured using VK-X250 manufactured by Keyence Corp. under the following measurement conditions. Note that the measurement method is not limited to the above as long as the measurement conditions conform to the following conditions and a correlation of instrumental error, if any, is taken into consideration in advance.

[Measurement conditions]

- Measurement apparatus: VK-X250 manufactured by Keyence Corp.
- Brightness: automatic setting
- Double scan (automatic)
- Measurement mode: surface texture mode
- Resolution: 1024x768
- High-resolution mode
- RPD: no setting
- Measurement height pitch: 0.1 $\mu$m
- Single field (without image assembling)

- Using x20 objective lens

[Image processing/measurement]

- Plane correction: "datum correction (whole region)"
- Curved surface correction: "Surface texture waviness correction level 3"
- Assemble point removal
- Total of 20 vertical lines measured (the average value of 20 sites was used for the line roughness, and this may substitute for parameters for which the surface roughness is defined).
- Roughness measurement: no cutoff with λs or λc, end correction is performed
- Visual field range during measurement: about 536 m in measurement length direction and about 714 m in direction perpendicular to measurement length

An HRC hardness of at least one of the flow path forming surface 40 and the flow path forming surface 50 is preferably 28 or more. In a case where the HRC hardness is 28 or more, it is possible to maintain a high foaming ratio and a reduction in an appearance defect due to surface roughness, thus a device with low maintenance costs can be provided.

As a method for measuring the HRC hardness, the HRC hardness can be measured by a method according to JIS Z 2245.

The method for measuring the HRC hardness is a destructive test. Thus, as long as it is confirmed in advance that the HRC hardness of the outermost surface can be correctly estimated, other hardness indices or tensile test strength can be used as a reference of the HRC hardness, or a material sampling inspection value may be used as the HRC hardness.

A contact angle of the flow path forming surface 40 and the flow path forming surface 50 with respect to water is not particularly limited and can be appropriately selected according to the purpose. However, the contact angle is preferably 60° or more and 105° or less.

In a case where the contact angle is 60° or more, the surface of the foam sheet is less likely to be roughened or have a swirl mark. In a case where the contact angle is 105° or less, the surface of the foam sheet is less likely to be roughened or have a swirl mark, and the pressure of the extruder is stabilized.

A method for measuring the contact angle is not particularly limited and can be appropriately selected according to the purpose. For example, the contact angle can be measured by a method according to JIS R 3257.

A material of the first flow path forming member and the second flow path forming member in the flow path forming device is not particularly limited and can be appropriately selected according to the purpose. Examples of the material include, but are not limited to, metal, steel, aluminum, plastic, stainless steel, pre-hardened steel, a cemented carbide, and high-speed steel, namely, S45C, S50C, S55C, A5052, SS400, SUS304, SUS316, SUS420, SKD11, SKH51, HPM-38, SCM415, SCM435, and SCM440. Further, these materials may be subjected to various coatings. Example of the coating include, but are not limited to, hard chrome plating, electroless nickel plating, anodizing, blackening, Parkerizing, carbide film formation, nitride film formation, oxide film formation, a DLC treatment, a silicone release treatment, and a fluorine release treatment. The coating is performed using, for example, Cr, Ni, Ni-P, amorphous alumina, crystallized alumina, zirconia, TiC, TiCN, TiN, WC, PTFE, ETFE, FEP, PCTFE, PFA, PVDF, a composite of these materials, and a composite of these materials and a plastic functional aid. Among these coatings, hard chrome plating is preferable. This can increase the maximum foaming ratio of the foam sheet without causing a corrugated wrinkle and prevent the surface of the foam sheet from becoming rough and having a swirl mark.

A shape of the flow path in the flow path forming device is not particularly limited and can be appropriately selected according to the purpose. Example of the shape include, but are not limited to, a cylindrical shape, a polygonal prism shape, and a trumpet shape.

Further, a method of the flow path forming device (hereinafter sometimes referred to as "mold") is not particularly limited and can be appropriately selected according to the purpose. Examples of the method include, but are not limited to, a T-die, a flat die, a seamless die, and a circular die. Among these methods, a seamless die is preferable, and a circular die is more preferable, from the viewpoint of obtaining a sheet having a high foaming ratio and no corrugation.

A size of the flow path in the flow path forming device is not particularly limited and can be appropriately selected according to the purpose. Regardless of the shape of the flow path, the diameter of a tip of a discharge portion is preferably 70 mm or more and 160 mm or less. This makes it easier to produce a sheet in a practical foaming ratio range of about 5 times to 30 times without corrugation and makes it possible to meet the market demand for a sheet width of the final product of 300 mm or more and 1,300 mm or less.

A method for forming the flow path forming surface in the flow path forming device is not particularly limited and can be appropriately selected according to the purpose. Examples of the forming method include, but are not limited to, sandblasting. Examples of the forming method also include electrolysis, chemical etching, and machining process such as lathe, in addition to the sandblasting.

It is known that, in a case where the air is used for the sandblasting, the roughness can be controlled by controlling an execution time, an injection pressure, a distance from workpiece, a processing angle, a media shape, a media material, and the like.

The sandblasting is affected by the environment such as the hardness of the outermost surface of workpiece, a configuration of work equipment, a deterioration degree of media, or a nozzle shape. However, for example, there is a relationship that increasing the injection pressure increases the surface roughness. Thus, any roughness can be obtained by repeating trial production using test pieces made of the same material as the product, or the like.

<Plastic composition>

The plastic composition includes at least one kind of plastic resin, preferably includes a filler and a foaming agent, and may further include other components as necessary. Note that the plastic composition refers to a plastic composition after being foamed.

-Plastic resin-

The plastic resin is not particularly limited and can be appropriately selected according to the purpose. Examples of the plastic resin that can be used include, but are not limited to, a styrene-based homopolymer such as polystyrene or poly-p-methylstyrene, a styrene-based copolymer such as a styrene-maleic anhydride copolymer, a styrene-acrylonitrile copolymer, a styrene-butadiene copolymer, a styrene-acrylonitrile-butadiene copolymer, a styrene-acrylic acid copolymer, or a styrene-methacrylic acid copolymer, a styrene-based resin such as a mixture of polystyrene and polyphenylene oxide, and an aliphatic polyester resin such as polylactic acid, polyglycolic acid, poly(3-hydroxybutyrate), poly(3-hydroxybutyrate-co-3-hydroxyhexanoate), poly(3-hydroxybutyrate-co-3-hydroxyvalerate), polycaprolactone, polybutylene succinate, or poly(butylene succinate-co-adipate). These resins may be used singly or in combination of two or more. Among these resins, an aliphatic polyester resin, which is a low environmental load polymer material, is preferable, and polylactic acid, which is a carbon-neutral material and relatively inexpensive, is more preferable.

Note that, as the aliphatic polyester resin, one synthesized using an alcohol component or a derivative of the alcohol component and an acid component or a derivative of the acid component may be used, or a commercially available product may be used.

Examples of the polylactic acid include, but are not limited to, a copolymer of D-lactic acid and L-lactic acid, a homopolymer of either D-lactic acid (D form) or L-lactic acid (L form), and a ring-opened polymer of at least one lactide selected from the group consisting of D-lactide (D-form), L-lactide (L-form), and DL-lactide. These polylactic acids may be used singly or in combination of two or more. Note that the polylactic acid in use may be appropriately synthesized or may be a commercially available product.

A ratio of D-form and L-form of the lactic acid constituting the polylactic acid is not particularly limited. However, either one of the D-form and L-form of the lactic acid constituting the polylactic acid preferably accounts for 95 mol% or more of the polylactic acid. The polylactic acid including only one of the D-form and L-form optical isomers may also be used.

The polylactic acid included in this range has high crystallinity, and a foam sheet produced using such a polylactic acid can be expected to have heat resistance and is suitable for food applications and the like.

The content of the plastic resin is not particularly limited and can be appropriately selected according to the purpose. However, the content is preferably 90% by mass or more with respect to the total amount of the plastic composition.

A method for measuring the content of the plastic resin is not particularly limited and can be appropriately selected according to the purpose. For example, the content can be measured by obtaining a weight ratio of the resin component using the ash obtained according to JIS K 7250-1.

-Filler-

The filler (hereinafter sometimes referred to as "foam nucleating material") is included for the purpose of adjusting a foaming state (bubble size, amount, arrangement, etc.) of the plastic composition, reducing costs, and improving strength.

The filler is not particularly limited and can be appropriately selected according to the purpose. Examples of the filler include, but are not limited to, an inorganic filler and an organic filler. These fillers may be used singly or in combination of two or more.

Examples of the inorganic filler include, but are not limited to, talc, kaolin, calcium carbonate, sheet silicate, zinc carbonate, wollastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, a metal fiber, metal whisker, ceramic whisker, potassium titanate, boron nitride, graphite, a glass fiber, and a carbon fiber. Among these fillers, silica is preferable because silica has a high affinity with a compressible fluid described below. Further, in a case where a filler other than silica is used as a base material, the filler is preferably subjected to a surface treatment with silica.

Examples of the organic filler include, but are not limited to, a naturally occurring polymer such as starch, cellulose, wood flour, bean curd refuse, a rice husk, or bran, a sorbitol compound, benzoic acid, a phosphoric acid ester metal salt, and a rosin compound. Among these fillers, cellulose is preferable from the point of low environmental load.

-Foaming agent-

The foaming agent is not particularly limited and can be appropriately selected according to the purpose. Examples of the foaming agent include, but are not limited to, a hydrocarbon such as a lower alkane such as propane, normal butane, isobutane, normal pentane, isopentane, or hexane, an ether such as dimethyl ether, a halogenated hydrocarbon such as methyl chloride or ethyl chloride, and a physical foaming agent such as compressible gas such as carbon dioxide or nitrogen. Among these foaming agents, compressible gas such as carbon dioxide or nitrogen is preferable because such compressible gas is odorless, safe to handle, and has a low environmental load.

Including the foaming agent makes it possible to obtain a plastic foam sheet having a high foaming ratio.

-Other components-

The above-mentioned other components are not particularly limited and can be appropriately selected according to the purpose. Examples of other components include, but are not limited to, a cross-linking agent, a heat stabilizer, an antioxidant, and a plasticizer.

The cross-linking agent is not particularly limited and can be appropriately selected according to the purpose. For example, at least one selected from an epoxy compound and an isocyanate compound is preferable, and an epoxy compound is more preferable.

A foam sheet produced using an aliphatic polyester resin composition including such a cross-linking agent can reduce coalescence and breakage of bubbles and improve the foaming ratio.

(Foam sheet)

The foam sheet of the present disclosure is obtained by foaming the plastic composition of the present disclosure and refers to a product obtained after foaming the aliphatic polyester resin composition.

The foaming ratio of the foam sheet is preferably 2 times to 50 times, more preferably 5 times to 40 times, still more preferably 10 times to 30 times. The foaming ratio of less than 2 times is not preferable because of a lack of lightweight properties although the strength is sufficient. The foaming ratio of more than 20 times is not preferable because of the insufficient strength although the lightweight properties are excellent.

A method for measuring the foaming ratio of the foam sheet is not particularly limited and can be appropriately selected according to the purpose. For example, the foaming ratio can be measured by a buoyancy type specific gravity measurement device. Further, the foaming ratio can also be obtained by measuring the bulk density and true density of the foam sheet and using the following formula: foaming ratio = true density $[g/cm^3]$/bulk density $[g/cm^3]$.

It is preferable that the foam sheet of the present disclosure does not substantially include a volatile component. Not substantially including a volatile component can improve the dimensional stability and reduce an effect on the human body and the environment. Examples of the volatile component include, but are not limited to, an organic solvent and a foaming agent such as butane.

In the present disclosure, as is described below, for example, carbon dioxide ($CO_2$) or the like used as a compressible fluid can also function as a foaming agent. Thus, in a case where carbon dioxide or the like is used as the compressible fluid, the use of the volatile component as a foaming agent can be avoided, and the foamed sheet is likely to be substantially free of the volatile component. The term "substantially free" means that the volatile component is at the detection limit or below in the following analysis.

A part of the foam sheet is used as a sample, and 2 parts by mass of 2-propanol is added to 1 part by mass of the sample, and the mixture is dispersed by ultrasonic waves for 30 minutes. Then, the mixture is stored in a refrigerator (5°C) for one day or more to obtain a volatile component extract. The volatile component extract is analyzed by gas chromatography (GC-14A, manufactured by Shimadzu Corp.) to quantify the volatile component in the foam sheet. The measurement conditions are as follows.

[Measurement conditions]

- • Apparatus: Shimadzu GC-14A
- • Column: CBP20-M 50-0.25
- • Detector: FID
- • Injection volume: 1 µL to 5 µL
- • Carrier gas: He 2.5 kg/cm$^2$
- • Hydrogen flow rate: 0.6 kg/cm$^2$
- • Air flow rate: 0.5 kg/cm$^2$
- • Chart speed: 5 mm/min
- • Sensitivity: Range 101 × Atten 20
- • Column temperature: 40°C
- • Injection temperature: 150°C

That is, in the foam sheet of the present disclosure, it is preferable that no organic compound having a boiling point of -20°C or more and less than 150°C at 1 atm is detected in the following measurement.

[Measurement]

A part of the foam sheet is dispersed in a solvent, and a volatile component extract is measured by the gas chromatography under the above-mentioned conditions to quantify an organic compound.

In order to avoid an organic compound from being detected when performing the above-mentioned measurement using the foam sheet, as described above, the foam sheet of the present disclosure can use a foaming agent other than an organic compound, such as $CO_2$. For example, doing as described above makes it possible to substantially reduce the content of the volatile component to 0% by mass. The foam sheet in which the organic compound is not detected can be handled safely without causing odor or the like.

(Extrusion molding device and extrusion molding method)

An extrusion molding method includes an extrusion molding process and, if necessary, other processes such as a kneading process and a foaming process. Note that the kneading process and the foaming process may be performed simultaneously or separately.

The extrusion molding method can be performed by an extrusion molding device of the present disclosure.

The extrusion molding device includes a flow path forming device and an extrusion molder, and further includes other means as necessary.

<Extrusion molder and extrusion molding process>

The extrusion molding process is a process in which a plastic composition is allowed to pass through the flow path of the flow path forming device to form a plastic by extrusion molding.

The extrusion molding process can be performed by an extrusion molder.

<Kneading device and kneading process>

A kneading process is a process of kneading an aliphatic polyester resin and a cross-linking agent at a temperature lower than the melting point of the aliphatic polyester resin in the presence of the compressible fluid to obtain an aliphatic polyester resin composition.

The kneading process can be performed by a kneading device.

The aliphatic polyester resin has a property of rapidly reducing melt viscosity at the melting point or higher. This facilitates aggregation of an additive and makes it difficult to disperse the additive in the resin by kneading.

Further, in a case where the aliphatic polyester resin and the cross-linking agent are kneaded at a high temperature, the cross-linking reaction is accelerated and the aliphatic polyester resin is polymerized, resulting in an increase in a gel fraction of the resin composition.

Impregnation with the compressible fluid makes it possible to perform the kneading in a high-viscosity state at a temperature lower than the melting point, allowing the unreacted cross-linking agent to be dispersed in the aliphatic polyester resin. That is, after kneading the aliphatic polyester resin in the presence of the compressible fluid, the cross-linking agent is added and kneaded to obtain a resin composition.

For example, as a result of intensive studies on the possibility of using the compressible fluid for kneading the aliphatic polyester resin composition, especially a polylactic acid and an additive, the present inventor has found that, in the presence of the compressible fluid, if the temperature is lower than the melting point of the polylactic acid, the viscosity of the polylactic acid can be made suitable for kneading, allowing the additive to be uniformly dispersed. Until now, kneading of the polylactic acid and the additive could only be possible in a region of low melt viscosity at the melting point or higher of the polylactic acid. In contrast, in the present disclosure, kneading can be performed in a high viscosity state at a temperature lower than the melting point of the polylactic acid by using the compressible fluid, making it possible to further improve the dispersibility of the cross-linking agent.

-Compressible fluid-

Examples of a substance that can be used in a state of the compressible fluid include, but are not limited to, carbon monoxide, carbon dioxide, dinitrogen monoxide, nitrogen, methane, ethane, propane, 2,3-dimethylbutane, ethylene, and dimethyl ether. Among these substances, carbon dioxide is preferable partly because carbon dioxide has a critical pressure of about 7.4 MPa and a critical temperature of about 31°C, can be easily brought into a supercritical state, and is nonflammable and easy to handle. These compressible fluids may be used singly or in combination of two or more.

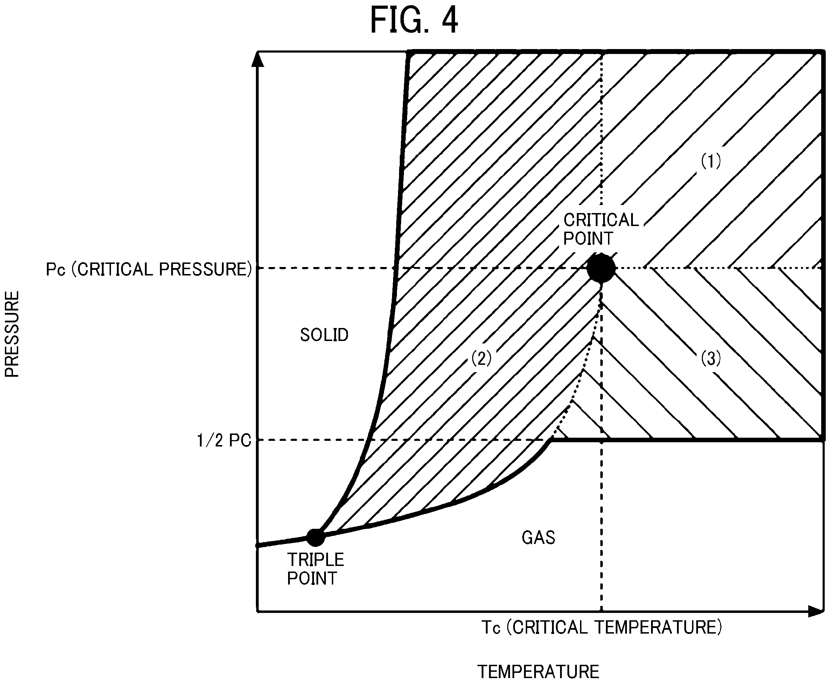

Here, the compressible fluid used for producing the aliphatic polyester resin composition will be described with reference to FIG. 4. FIG. 4 is a phase diagram for defining a range of the compressible fluid. The term "compressible fluid" in the present embodiment means a state of a substance existing in any one of regions (1), (2), and (3) illustrated in FIG. 4.

It is known that, in such regions, the density of the substance becomes extremely high, and the substance behaves differently than at normal temperature and normal pressure. Note that, if the substance exists in the region (1), the substance becomes a supercritical fluid. The supercritical fluid is a fluid that exists as a non-condensable high-density fluid in a temperature and pressure range that exceeds the limit (critical point) at which gas and liquid can coexist, and that does not condense even when compressed. Further, if the substance exists in the region (2), the substance becomes a liquid. Such a liquid represents a liquefied gas obtained by compressing the substance that is in a gaseous state at normal temperature (25°C) and normal pressure (1 atm). Further, if the substance exists in the region (3), the substance is in a gaseous state. Such gas represents high-pressure gas with a pressure of 1/2 ($1/2P_c$) or more of the critical pressure ($P_c$).

Since the solubility of the compressible fluid changes depending on a combination of the resin type and the compressible fluid, temperature, and pressure, it is necessary to appropriately adjust the supply amount of the compressible fluid.

For example, for a combination of the polylactic acid and carbon dioxide, the supply amount is preferably 2% by mass or more and 30% by mass or less. In a case where the supply amount of carbon dioxide is 2% by mass or more, it is possible to prevent a problem in that the effect of plasticity is limited. In a case where the supply amount of carbon dioxide is 30% by mass or less, it is possible to prevent a problem in that the cross-linking agent cannot be sufficiently dispersed due to phase separation occurring between carbon dioxide and the polylactic acid.

-Kneading device-

As a kneading device used for producing the aliphatic polyester resin composition, a continuous process or a batch-type process can be adopted. However, it is preferable to appropriately select a reaction process in consideration of device efficiency, characteristics and quality of product, and the like.

From the point of coping with the viscosity suitable for kneading, examples of the kneading device that can be used include, but are not limited to, a single-screw extruder, a twin-screw extruder, a kneader, an anaxial basket-type stirring vessel, BIVOLAK manufactured by Sumitomo Heavy Industries, Ltd., N-SCR manufactured by Mitsubishi Heavy Industries, Ltd., and a tubular polymerization vessel equipped with a spectacle-shaped blade or a lattice blade manufactured by Hitachi, Ltd., a Kenics-type static mixer, or a Sulzer-type SMLX static mixer. From the point of color tone, examples of the kneading device include, but are not limited to, a self-cleaning polymerization device such as FINISHER, N-SCR, or a twin-screw extruder. Among these kneading devices, FINISHER and N-SCR are preferable from the point of production efficiency, resin color tone, stability, and heat resistance.

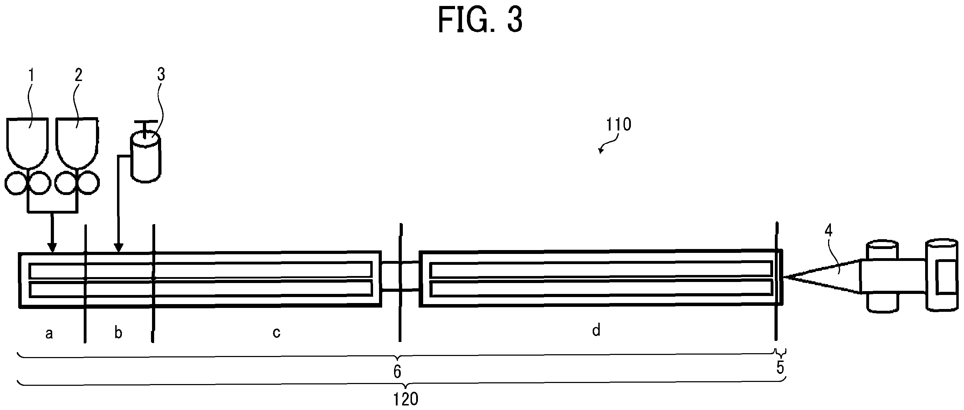

An example of the kneading device is illustrated in FIG. 3. As a continuous kneading device 100 in FIG. 3, for example, a twin-screw extruder (manufactured by Japan Steel Works, Ltd.) can be used. For example, a screw diameter is set to 42 mm with L/D=48. In this example, a raw material such as, for example, a polylactic acid or a cross-linking agent is supplied from a first supply unit 1 and a second supply unit 2 to a raw material mixing/melting area a to be mixed and melted. The raw material mixed and melted is supplied with the compressible fluid by a compressible fluid supply unit 3 in a compressible fluid supply area b. Next, the mixture is kneaded in a kneading area c. Next, after the compressible fluid is removed in a compressible fluid removal area d, the mixture is, for example, pelletized in a molding processing area e.

In a case where the aliphatic polyester resin composition thus produced is used as a precursor for the foam sheet production, such a composition is sometimes referred to as masterbatch. Note that the aliphatic polyester resin composition that has been subjected to processing such as pelletization may also be referred to as masterbatch.

Note that the compressible fluid (liquid material) is supplied by, for example, a metering pump, and a solid raw material such as the resin pellet or the cross-linking agent is supplied by, for example, a metering feeder.

-Raw material mixing/melting area a-

In a raw material mixing/melting area, the temperature of the resin pellet is increased. Further, the additive (foam nucleating material) that does not react at high temperatures can also be mixed with the resin. The heating temperature is set to the melting temperature or higher of the resin so that the resin can be uniformly mixed with the compressible fluid in the subsequent area where the compressible fluid is supplied.

-Compressible fluid supply area b-

When the resin pellet is melted by heating, the compressible fluid is supplied to plasticize the melted resin.

-Kneading area c-

The temperature of a kneading area is set so that the viscosity is suitable for kneading the resin composition. The set temperature varies depending on specifications of the reactor, the resin type, the resin structure, the molecular weight, and the like. Thus, the set temperature is not particularly limited and can be appropriately changed. For example, in a case of commercially available polylactic acid having a weight-average molecular weight (Mw) of about 200,000, the kneading is usually performed at the melting point +10°C to 20°C of the polylactic acid.

In contrast, the present disclosure is characterized by performing kneading at a temperature lower than the melting point of the polylactic acid, making it possible to perform kneading with relatively high viscosity at a temperature lower than the melting point. The kneading temperature is not particularly limited as long as the kneading temperature is lower than the melting point. However, the kneading temperature is preferably the melting point - 30°C to -80°C in order to reduce the progress of the cross-linking reaction of the cross-linking agent to be mixed in this area.

-Compressible fluid removal area d-

In a compressible fluid removal area d, a pressure valve provided in the extruder is opened to discharge the compressible fluid to the outside.

-Molding processing area e-

In a molding processing area e, the aliphatic polyester resin composition is molded and processed into an aliphatic polyester resin composition having any appropriate shape such as a pellet.

The pressure in each area in the extruder can be appropriately set. For example, the pressure from the compressible fluid supply area b to the compressible fluid removal area d can be set to 7 Mpa.

<Foaming process>

A foaming process is a process of foaming the aliphatic polyester resin composition while removing the compressible fluid from the aliphatic polyester resin composition.

The foaming process is a process of foaming the aliphatic polyester composition (polylactic acid composition) by removing the compressible fluid.

The compressible fluid is gradually replaced with the air under the atmosphere and can be removed from the foam sheet. The compressible fluid can be removed by, for example, exposing the composition to the atmosphere. The temperature during the foaming process is preferably increased to around the melting point of the polylactic acid resin.

It is understood that, in the foaming process, an operation, such as depressurization or heating, to lower the solubility of the compressible fluid and make the compressible fluid supersaturated causes the compressible fluid dissolved in the aliphatic polyester composition to form foaming nuclei mainly at the interface with the foam nucleating material. The compressible fluid dissolved in the aliphatic polyester composition diffuses into the foaming nuclei, causing the foaming nuclei to grow into bubbles. As a result, a foam is obtained. Since the foam nucleating material provides the starting point for foaming, a foam sheet having uniform and fine foaming can be produced only when the foam nucleating material is uniformly dispersed in the polylactic acid. A foam sheet having uniform and fine foaming can be produced even if no foam nucleating material is used. This is because a small amount of crystals generated in the kneading area practically act as the foam nucleating material. However, excessive progress of crystallization may reduce the fluidity of the composition, making it difficult to perform the foaming itself. Thus, it is preferable to include the foam nucleating material.

<Foam sheet forming device>

Next, a foam sheet is produced by a foam sheet forming device. As the foam sheet forming device, for example, the device exemplified in the above-mentioned kneading device can be used. The kneading device and the foam sheet forming device may be combined in a single device or exist as separate devices.

An example of the foam sheet forming device is shown in FIG. 3. A continuous foam sheet forming device 110 includes an extrusion molding device 120. The extrusion molding device 120 includes an extrusion molder 6 and a flow path forming device 5 that is the above-described flow path forming device of the present disclosure. As the extrusion molder 6, for example, a twin-screw extruder can be used in the same manner as described above. In the continuous foam sheet forming device 110, for example, a raw material such as masterbatch, a resin, or a foam nucleating material is supplied from a first supply unit 1 and a second supply unit 2 to a raw material mixing/melting area a to be mixed and melted. The raw material mixed and melted is supplied with the compressible fluid by a compressible fluid supply unit 3 in a compressible fluid supply area b.

Next, the mixture is kneaded in a kneading area c, serving as a kneader, to obtain an aliphatic polyester composition. Further, the aliphatic polyester composition is supplied to a heating area d, where the composition is heated and kneaded. Subsequently, the composition is subjected to extrusion foaming by, for example, exposing the composition to the atmosphere. A foam sheet 4 subjected to the extrusion foaming is wound along a mandrel.

In the continuous foam sheet forming device 110, the raw material mixing/melting area a, the compressible fluid supply area b, and the kneading area c are also referred to as a first extruder, and the heating area d is also referred to as a second extruder.

In this example, the mixed, melted, and kneaded raw material is extruded from the first extruder to the second extruder, and the foam sheet is subjected to extrusion foaming by the second extruder. A circular die, for example, can be used in the second extruder.

In this example, the kneading process is performed by the kneading device and the first extruder of the foam sheet forming device, and the foaming process described below is performed by the second extruder of the foam sheet forming device. However, the present disclosure is not limited to such a configuration. For example, the regions where the kneading process and the foaming process are performed can be appropriately changed.

-Raw material mixing/melting area a-

In a raw material mixing/melting area, masterbatch, an additive, a resin pellet, and the like are mixed and heated. If the concentration of the cross-linking agent included in the masterbatch is high, the cross-linking agent concentration is adjusted to an appropriate value by adding and kneading with the resin component. A type of the resin to be used is not particularly limited, and the above-mentioned aliphatic polyester resin can be used. However, it is preferable to use the same resin as in the masterbatch, because the resin is uniformly mixed in the kneading process, and the included unreacted cross-linking agent is also uniformly dispersed.

The additive that can be used is not particularly limited. Examples of the additive include, but are not limited to, a foam nucleating material, a heat stabilizer, an antioxidant, and a plasticizer. Further, although the masterbatch already includes the cross-linking agent, the cross-linking agent may be further added. Types of the cross-linking agent and the additive to be used are not particularly limited, and those described above or the like can be used as the cross-linking agent and the additive for the aliphatic polyester composition. These cross-linking agents or additives may be used singly or in combination of two or more.

The foam nucleating material is uniformly dispersed in the resin in the kneading process, so that uniform and fine foaming can be expected. Further, the foam nucleating material is also included to adjust the diameter, the number density, and the like of bubbles of the foam sheet and to improve the crystallinity.

The cross-linking agent provides a high foaming ratio and uniformity of the sheet by polymerizing the resin.

For the reasons described above, in order to produce a foam sheet with a high foaming ratio and uniformity, the foam sheet preferably includes the foam nucleating material and the cross-linking agent.

The timing of adding the above-mentioned additive is not specified. However, since the addition timing is not specified, as an example, the foam nucleating material can be added in the kneading process during the production of the aliphatic polyester composition, in the kneading process during the production of the foam sheet, or in both kneading processes.

The amount of the cross-linking agent in the foam sheet varies depending on the molecular weight of the resin to be used and the molecular weight distribution of the resin. In particular, in a case where a biodegradable resin is used as the aliphatic polyester resin, the amount of the cross-linking agent is preferably adjusted to 3% by mass or less so as not to impair biodegradability.

The amount of the foam nucleating material in the foam sheet is preferably adjusted to 3 parts by mass or less. In a case where the amount exceeds 3 parts by mass, the foam sheet may become hard and brittle in physical properties. In particular, in a case where a biodegradable resin is used as the aliphatic polyester resin, the content of the non-biodegradable foam nucleating material is preferably less, and the content is more preferably adjusted to 1 part by mass or less.

Further, in a case where a biodegradable resin is used as the aliphatic polyester resin, from the viewpoint of biodegradability and recyclability (easy recycling), the biodegradable resin preferably accounts for 98% by mass or more with respect to the total amount of the organic material in the foam sheet. In a case where the content is 98% by mass or more, it is possible to prevent a problem in which, after the polylactic acid is biodegraded, other non-biodegradable components remain. In a case where the content is less than 98% by mass, it is difficult to obtain good biodegradability.

The biodegradable resin such as the polylactic acid is the main organic material in the foam sheet. Examples of the organic material other than the polylactic acid include, but are not limited to, an organic nucleating material and the cross-linking agent. In a case where the inorganic nucleating material is used as the foam nucleating material, the inorganic nucleating material is not considered as the above-mentioned organic matter.

-Method for measuring polylactic acid content ratio-

The content ratio of the polylactic acid can be calculated based on a ratio of material to be charged. If the material ratio is unknown, for example, the component can be identified by performing the following GCMS analysis in which a comparison is performed using a known polylactic acid as a reference sample. If necessary, calculation can be performed in combination with an area ratio of spectrum in NMR measurement and other analysis methods.

[Measurement by GCMS analysis]

- GCMS: QP2010 manufactured by Shimadzu Corp., auxiliary device PY-3030D manufactured by Frontier Laboratories Ltd.
- Separation column: Ultra ALLOY UA5-30M-0.25F manufactured by Frontier Laboratories Ltd.
- Sample heating temperature: 300°C
- Column oven temperature: 50°C (1 minute hold), increased at 15°C/minute to 320°C

(6 minutes)

- Ionization method: electron ionization (E.I.) method
- Detection mass range: 25 to 700 (m/z)

To give further details, regarding the content ratio of the polylactic acid in the foam sheet, the ratio of the polylactic acid in the foam sheet can be obtained by, for example, performing an analysis using gas chromatography-mass spectrometry (GC-MS) in which a calibration curve is obtained in advance using a known polylactic acid as a reference sample. Further, in this analysis, if an organic nucleating agent is identified by mass spectrum library search, the added amount can be quantified by producing a calibration curve. If necessary, calculation can be performed in combination with an area ratio of spectrum in NMR measurement and other analysis methods.

-Compressible fluid supply area b-

<<Compressible fluid used in kneading process during production of foam sheet>>

In the kneading process during the production of the foam sheet, the same compressible fluid as described above for the kneading process of the aliphatic polyester resin can be used. Among these compressible fluids, carbon dioxide is preferable partly because carbon dioxide has a critical pressure of about 7.4 MPa and a critical temperature of about 3 1°C, can be easily brought into a supercritical state, and is nonflammable and easy to handle. These compressible fluids may be used singly or in combination of two or more.

Further, the compressible fluid can also function as a foaming agent depending on a type of the compressible fluid. A foaming agent is usually used for producing a foam sheet. However, in a case where the compressible fluid such as carbon dioxide or nitrogen is used as the foaming agent, kneading and foaming can be performed in a series of processes, which is more preferable as a production form from the viewpoint of reducing an environmental load.

Since the solubility of the compressible fluid changes depending on a combination of the resin type and the compressible fluid, temperature, and pressure, it is necessary to appropriately adjust the supply amount of the compressible fluid. For example, in a case of a combination of the polylactic acid and carbon dioxide, the supply amount of carbon dioxide is preferably 2% by mass or more and 30% by mass or less when the aliphatic polyester resin composition (including the polylactic acid and, if necessary, the foam nucleating material, a cross-linking agent, etc.) is 100 parts by mass. In a case where the supply amount of carbon dioxide is 2% by mass or more, it is possible to prevent a problem in that the effect of plasticity is limited. In a case where the supply amount of carbon dioxide is 30% by mass or less, it is possible to prevent a problem in that carbon dioxide and the polylactic acid undergo phase separation, making it difficult to obtain a foam sheet with a uniform thickness.

Further, the volatile component included in the obtained foam sheet as an organic solvent or a foaming agent such as butane may have an effect on the human body or the environment. It is desirable that these volatile components are not substantially included. The compressible fluid such as carbon dioxide and nitrogen, which also functions as the foaming agent, diffuses rapidly from the foam sheet into the atmosphere after the sheet is produced, making it easier to keep the foam sheet substantially free of the volatile component. The term "substantially" means that the volatile component is at the detection limit or below in the following analysis.

To 1 part by mass of the aliphatic polyester resin composition to be measured, 2 parts by mass of 2-propanol is added, and the mixture is dispersed by ultrasonic waves for 30 minutes. Then, the mixture is stored in a refrigerator (5°C) for one day or more to extract a volatile component in the aliphatic polyester resin composition.

A supernatant liquid of the stored dispersion is analyzed by gas chromatography (GC-14A manufactured by Shimadzu Corp.) to quantify the volatile component in the aliphatic polyester resin composition. The measurement conditions are as follows.

[Measurement conditions]

- Apparatus: Shimadzu GC-14A
- Column: CBP20-M 50-0.25
- Detector: FID
- Injection volume: 1 $\mu$L to 5 $\mu$L
- Carrier gas: He 2.5 kg/cm$^2$
- Hydrogen flow rate: 0.6 kg/cm$^2$
- Air flow rate: 0.5 kg/cm$^2$
- Chart speed: 5 mm/min
- Sensitivity: Range 101 $\times$ Atten 20
- Column temperature: 40°C
- Injection temperature: 150°C

<<Other foaming agents>>

Other foaming agents may be used apart from the compressible fluid. As described above, it is preferable to use the compressible fluid such as carbon dioxide or nitrogen as the foaming agent. However, from the point of easily obtaining a foam sheet with a high foaming ratio, examples of other foaming agents that can be used include, but are not limited to, a hydrocarbon such as a lower alkane such as propane, normal butane, isobutane, normal pentane, isopentane, or hexane, an ether such as dimethyl ether, a halogenated hydrocarbon such as methyl chloride or ethyl chloride, and a physical foaming agent such as compressible gas such as carbon dioxide or nitrogen.

<Other processes>

Other processes are not particularly limited, and examples of other processes include, but are not limited to, a process that is performed in the production of an ordinary foam sheet. For example, a molding process of processing into a sheet and the like can be mentioned.

Examples of the molding process include, but are not limited to, vacuum molding, pressure molding, and press molding.

A sheet molded product is obtained by the molding process. Further, a process of subjecting a foam sheet to thermoforming to obtain a molded product, and the like can be mentioned.

<Manufactured product>

The foam sheet of the present disclosure may be used as it is or as a manufactured product. The foam sheet of the present disclosure excellent in lightweight properties and heat resistance can be suitably used as a food container and tableware. Further, although the foam sheet is suitable as a heat-resistant food container, the foam sheet is not limited to such use. Further, the foam sheet of the present disclosure may be directly printed and used.

The manufactured product using the foam sheet of the present disclosure is not particularly limited and can be appropriately changed. The manufactured product of the present disclosure includes the foam sheet of the present disclosure and other components as necessary. Other components described above are not particularly limited as long as other components are used in an ordinary resin product, and can be appropriately selected according to the purpose.

The foam sheet of the present disclosure may be processed into the manufactured product of the present disclosure. The processing of the foam sheet is not particularly limited, and for example, the foam sheet may be subjected to a process in which the foam sheet is processed using a mold to obtain a product. The method for processing the sheet using the mold is not particularly limited, and a conventionally known method for a thermoplastic resin can be used. Examples of the method include, but are not limited to, vacuum molding, pressure molding, vacuum pressure molding, and press molding.

Examples of the manufactured product (also called a consumable material) include, but are not limited to, a packaging container, a tray, tableware, and cutlery. This concept of the manufactured product includes not only a manufactured product as a single body, but also a part of a manufactured product such as a handle of a tray, a product including a manufactured product such a tray with a handle, and the like. Other manufactured products include a bag, stationery, daily necessities, and the like.

[Example]

Examples of the present disclosure are described below. However, the present disclosure is not limited to these examples.

(Example 1)

S45C (manufactured by Misumi Group Inc.) was processed by sandblasting (manufactured by MonotaRO Co., Ltd., using alumina polishing media for blasting, processing angle of about 45 degrees) to produce a first flow path forming member and a second flow path forming member in a flow path forming device. As illustrated in FIG. 1, a first flow path forming member 10 and a second flow path forming member 20 formed a flow path 30. In this manner, an extrusion molding device (continuous kneading device) 120 as illustrated in FIG. 3 was produced.

When the surface roughness parameters of the flow path forming surfaces of the first flow path forming member and the second flow path forming member were measured, the surface roughness parameter Rk was 6.42 $\mu$m, the surface roughness parameter Rpk was 2.067 $\mu$m, the surface roughness parameter RSm was 139.9 $\mu$m, the surface parameter Ra was 2.806 $\mu$m, and the contact angle was 74.2°.

The extrusion molding device (continuous kneading device) 120 including the flow path forming device 5, illustrated in FIG. 3, was used to supply a polylactic acid and a filler at a total flow rate of 10 kg/hr. A polylactic acid A (manufactured by NatureWorks LLC, 4032D, melting point of 168°C) was used as the polylactic acid and supplied at 9 kg/hr, magnesite (manufactured by Konoshima Chemical Co., Ltd., MS-S, number average particle diameter of 1.2 $\mu$m) was used as a filler and supplied at 1 kg/hr, and carbon dioxide was used as a compressible fluid and supplied at 0.9 kg/hr (equivalent to 10% by mass with respect to the polylactic acid). The mixture was kneaded to obtain a polylactic acid composition and a sheet.

The temperature of each zone was set as follows: raw material mixing/melting area a and compressible fluid supply area b: 190°C, kneading area c: 160°C, and heating area d: 160°C. The pressure of each zone was set as follows: from compressible fluid supply area b to kneading area c: 10.0 MPa, heating area d: 30 MPa, and flow path forming device 5: 10 MPa. The thickness of the sheet was set to 3 mm. Note that each surface roughness parameter was measured by the following method.

As a measurement method, the surface roughness parameters RPc, Rpk, RSm, and Ra were measured using a portable roughness meter such as VK-X250 manufactured by Keyence Corp. and SJ-210 manufactured by Mitutoyo Corp.

Specifically, the surface roughness parameters were measured using VK-X250 manufactured by Keyence Corp. under the following measurement conditions.

[Measurement conditions]

- Measurement apparatus: VK-X250 manufactured by Keyence Corp.
- Brightness: automatic setting
- Double scan (automatic)
- Measurement mode: surface texture mode
- Resolution: 1024x768
- High-resolution mode
- RPD: no setting
- Measurement height pitch: 0.1 $\mu$m
- Single field (without image assembling)
- Using x20 objective lens

[Image processing/measurement]

- Plane correction: "datum correction (whole region)"
- Curved surface correction: "Surface texture waviness correction level 3"
- Assemble point removal
- Total of 20 vertical lines measured (the average value of 20 sites was used for the line roughness, and this may substitute for parameters for which the surface roughness is defined).
- Roughness measurement: no cutoff with $\lambda$s or $\lambda$c, end correction is performed
- Visual field range during measurement: about 536 m in measurement length direction and about 714 m in direction perpendicular to measurement length

(Example 2)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 1.2 $\mu$m, the surface roughness parameter Rpk was 0.419 $\mu$m, the surface roughness parameter RSm was 58.5 $\mu$m, the surface parameter Ra was 0.794 $\mu$m, and the contact angle was 81.1°. Each surface roughness parameter was measured by the same method as in Example 1.

(Example 3)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 3.5 $\mu$m, the surface roughness parameter Rpk was 3.332 $\mu$m, the surface roughness parameter RSm was 130.7 $\mu$m, the surface parameter Ra was 1.904 $\mu$m, and the contact angle was 100°. Each surface roughness parameter was measured by the same method as in Example 1.

(Example 4)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 1.26 $\mu$m, the surface roughness parameter Rpk was 0.486 $\mu$m, the surface roughness parameter RSm was 213.2 $\mu$m, the surface parameter Ra was 1.23 $\mu$m, and the contact angle was 93.4°. Each surface roughness parameter was measured by the same method as in Example 1.

(Example 5)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 1.94 $\mu$m, the surface roughness parameter Rpk was 1.245 $\mu$m, the surface roughness parameter RSm was 34.9 $\mu$m, the surface parameter Ra was 2.114 $\mu$m, and the contact angle was 107.4°. Each surface roughness parameter was measured by the same method as in Example 1.

(Example 6)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 5.99 $\mu$m, the surface roughness parameter Rpk was 2.753 $\mu$m, the surface roughness parameter RSm was 93.95 $\mu$m, the surface parameter Ra was 2.776 $\mu$m, and the contact angle was 109.1°. Each surface roughness parameter was measured by the same method as in Example 1.

(Example 7)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 3.44 $\mu$m, the surface roughness parameter Rpk was 2.067 $\mu$m, the surface roughness parameter RSm was 58.69 $\mu$m, the surface parameter Ra was 2.618 $\mu$m, and the contact angle was 87.99°. Each surface roughness parameter was measured by the same method as in Example 1.

(Example 8)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 12.5 $\mu$m, the surface roughness parameter Rpk was 7.645 $\mu$m, the surface roughness parameter RSm was 304.2 $\mu$m, the surface parameter Ra was 6.45 $\mu$m, and the contact angle was 43.96°. Each surface roughness parameter was measured by the same method as in Example 1.

(Example 9)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 2.9 $\mu$m, the surface roughness parameter Rpk was 0.882 $\mu$m, the surface roughness parameter RSm was 162.7 $\mu$m, the surface parameter Ra was 2.347 $\mu$m, and the contact angle was 68.75°. Each surface roughness parameter was measured by the same method as in Example 1.

(Comparative example 1)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 0.88 $\mu$m, the surface roughness parameter Rpk was 0.48 $\mu$m, the surface roughness parameter RSm was 64.5 $\mu$m, the surface parameter Ra was 0.978 $\mu$m, and the contact angle was 111.1°. Each surface roughness parameter was measured by the same method as in Example 1.

(Comparative example 2)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 0.38 $\mu$m, the surface roughness parameter Rpk was 0.177 $\mu$m, the surface roughness parameter RSm was 21.2 $\mu$m, the surface parameter Ra was 0.712 $\mu$m, and the contact angle was 78.1°. Each surface roughness parameter was measured by the same method as in Example 1.

(Comparative example 3)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 0.54 $\mu$m, the surface roughness parameter Rpk was 0.18 $\mu$m, the surface roughness parameter RSm was 40.8 $\mu$m, the surface parameter Ra was 0.689 $\mu$m, and the contact angle was 48.3°. Each surface roughness parameter was measured by the same method as in Example 1.

(Comparative example 4)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 0.58 $\mu$m, the surface roughness parameter Rpk was 0.183 $\mu$m, the surface roughness parameter RSm was 47.5 $\mu$m, the surface parameter Ra was 1.062 $\mu$m, and the contact angle was 114.2°. Each surface roughness parameter was measured by the same method as in Example 1.

(Comparative example 5)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 0.99 $\mu$m, the surface roughness parameter Rpk was 0.591 $\mu$m, the surface roughness parameter RSm was 30.7 $\mu$m, the surface parameter Ra was 1.624 $\mu$m, and the contact angle was 58.8°. Each surface roughness parameter was measured by the same method as in Example 1.

(Comparative example 6)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 0.95 $\mu$m, the surface roughness parameter Rpk was 0.545 $\mu$m, the surface roughness parameter RSm was 39.3 $\mu$m, the surface parameter Ra was 1.083 $\mu$m, and the contact angle was 108.5°. Each surface roughness parameter was measured by the same method as in Example 1.

(Comparative example 7)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 0.54 $\mu$m, the surface roughness parameter Rpk was 0.206 $\mu$m, the surface roughness parameter RSm was 24.7 $\mu$m, the surface parameter Ra was 0.842 $\mu$m, and the contact angle was 55.6°. Each surface roughness parameter was measured by the same method as in Example 1.

(Comparative example 8)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 0.07 $\mu$m, the surface roughness parameter Rpk was 0.02 $\mu$m, the surface roughness parameter RSm was 33.7 $\mu$m, the surface parameter Ra was 0.52 $\mu$m, and the contact angle was 108.5°. Each surface roughness parameter was measured by the same method as in Example 1.

(Comparative example 9)

A polylactic acid composition and a sheet were obtained in the same manner as in Example 1 except that, in the above-mentioned Example 1, the flow path forming device 5 was changed to another flow path forming device in which the surface roughness parameter Rk of the flow path forming surfaces of the first flow path forming member and the second flow path forming member was 0.25 $\mu$m, the surface roughness parameter Rpk was 0.056 $\mu$m, the surface roughness parameter RSm was 75.86 $\mu$m, the surface parameter Ra was 0.982 $\mu$m, and the contact angle was 68.83°. Each surface roughness parameter was measured by the same method as in Example 1.

Next, the foaming ratio and appearance of each foam sheet obtained were evaluated as follows. The results are shown in Table 1.

<Foaming ratio>

The foaming ratio of the foam sheet was obtained as follows.

-Calculation of foaming ratio-

The foaming ratio of the foam sheet was obtained using the following formula. Note that the foaming ratio of the foam sheet was obtained by dividing the density (true density $\rho 0$) of the composition constituting the foam sheet by the bulk density ($\rho 1$) on the basis of the following formula (1).

$$\text{Foaming ratio} = \text{true density } (\rho 0)/\text{bulk density } (\rho 1) \cdots \text{ formula (1)}$$

The true density ($\rho 0$) is a density of the plastic composition remaining as a final plastic composition, and the true density of the polylactic acid is about 1.25 g/cm$^3$.

The bulk density was measured as follows. Specifically, the foam sheet was allowed to stand under an environment adjusted to a temperature of 23°C and a relative humidity of 50% for 24 hours or more, and a test piece of 50 mm $\times$ 50 mm was cut out. The bulk density of the cut test piece was obtained by a hydrostatic weighing method using an automatic densimeter (DSG-1 manufactured by Toyo Seiki Seisaku-sho, Ltd.). In this method, the bulk density is calculated based on the following formula by accurately weighing the weight (g) of the foam sheet in the atmosphere and then accurately weighing the weight (g) of the foam sheet in water.

$$\text{Bulk density [g/cm}^3] = \text{sample weight [g] in atmosphere}/\{(\text{sample weight [g] in atmosphere - weight [g] in liquid}) \times \text{liquid density [g/cm}^3]\}$$

With the measurement values of the true density and the bulk density thus obtained, the foaming ratio was obtained based on the formula (1) and evaluated according to the following criteria.

[Evaluation criteria]

    Excellent: foaming ratio of 7.0 times or more
    Good: foaming ratio of 5.0 times or more and less than 7.0 times
    Fair: foaming ratio of 3.0 times or more and less than 5.0 times
    Poor: foaming ratio of less than 3.0 times

<Appearance>

The appearance of the foam sheet was evaluated as follows.

The obtained foam sheet was visually observed, and the appearance was evaluated based on the following criteria. Note that the appearance was evaluated by observing the foam sheet in a state in which the foaming ratio was maximized within the range in which a corrugated wrinkle did not occur in the foam sheet.

[Evaluation criteria]

Good: no roughness or swirl mark on foam sheet surface
Poor: roughness and swirl mark on foam sheet surface

Table 1

| | Molds | | | | | | Evaluation results | | |
|---|---|---|---|---|---|---|---|---|---|
| | Mold No. | Surface roughness parameter Rk (μm) | Surface roughness parameter Rpk (μm) | Surface roughness parameter RSm (μm) | Surface roughness parameter Ra (μm) | Contact angle (°) | Foaming ratio | | Appearance |
| Example 1 | 1 | 6.42 | 2.067 | 139.9 | 2.806 | 74.2 | 5.1 | Good | Good |
| Example 2 | 2 | 1.2 | 0.419 | 58.5 | 0.794 | 81.1 | 5.9 | Good | Good |
| Example 3 | 3 | 3.5 | 3.332 | 130.7 | 1.904 | 100 | 8.3 | Excellent | Good |
| Example 4 | 4 | 1.26 | 0.486 | 213.2 | 1.23 | 93.4 | 5.8 | Good | Good |
| Example 5 | 5 | 1.94 | 1.245 | 34.9 | 2.114 | 107.4 | 5.1 | Good | Good |
| Example 6 | 6 | 5.99 | 2.753 | 93.95 | 2.776 | 109.1 | 6.8 | Good | Good |
| Example 7 | 7 | 3.44 | 2.067 | 58.69 | 2.618 | 87.99 | 10.1 | Excellent | Good |
| Example 8 | 8 | 12.5 | 7.645 | 304.2 | 6.45 | 43.96 | 5 | Good | Good |
| Example 9 | 9 | 2.9 | 0.882 | 162.7 | 2.347 | 68.75 | 7.8 | Excellent | Good |
| Comparative example 1 | 10 | 0.88 | 0.48 | 64.5 | 0.978 | 111.1 | 2.7 | Poor | Good |
| Comparative example 2 | 11 | 0.38 | 0.177 | 21.2 | 0.712 | 78.1 | 1.8 | Poor | Poor |
| Comparative example 3 | 12 | 0.54 | 0.18 | 40.8 | 0.689 | 48.3 | 2.5 | Poor | Poor |
| Comparative example 4 | 13 | 0.58 | 0.183 | 47.5 | 1.062 | 114.2 | 1.7 | Poor | Good |
| Comparative example 5 | 14 | 0.99 | 0.591 | 30.7 | 1.624 | 58.8 | 3.5 | Fair | Poor |
| Comparative example 6 | 15 | 0.95 | 0.545 | 39.3 | 1.083 | 108.5 | 2.2 | Poor | Poor |
| Comparative example 7 | 16 | 0.54 | 0.206 | 24.7 | 0.842 | 55.6 | 2.6 | Poor | Good |
| Comparative example 8 | 17 | 0.07 | 0.02 | 33.7 | 0.52 | 108.5 | 2.1 | Poor | Poor |

EP 4 249 208 A1

(continued)

|  | Molds | | | | | | Evaluation results | |
|---|---|---|---|---|---|---|---|---|
|  | Mold No. | Surface roughness parameter Rk (μm) | Surface roughness parameter Rpk (μm) | Surface roughness parameter RSm (μm) | Surface roughness parameter Ra (μm) | Contact angle (°) | Foaming ratio | Appearance |
| Comparative example 9 | 18 | 0.25 | 0.056 | 75.86 | 0.982 | 68.83 | 1.9 Poor | Good |

# EP 4 249 208 A1

Embodiments of the present disclosure are, for example, as follows.

<1> A flow path forming device including a first flow path forming member and a second flow path forming member that form a tubular flow path, through which a plastic composition is allowed to pass to mold the plastic composition; and
at least one of a flow path forming surface of the first flow path forming member and a flow path forming surface of the second flow path forming member has a surface roughness parameter Rk of 1.0 $\mu$m or more.

<2> The flow path forming device according to <1>, in which at least one of the flow path forming surface of the first flow path forming member and the flow path forming surface of the second flow path forming member has a surface roughness parameter Rk of 6.3 $\mu$m or less.

<3> The flow path forming device according to <1> or <2>, in which at least one of the flow path forming surface of the first flow path forming member and the flow path forming surface of the second flow path forming member has a surface roughness parameter Rpk of 0.45 $\mu$m or more.

<4> The flow path forming device according to <1> or <2>, in which at least one of the flow path forming surface of the first flow path forming member and the flow path forming surface of the second flow path forming member has the surface roughness parameter Rpk of 6.4 $\mu$m or less.

<5> The flow path forming device according to <1> or <2>, in which at least one of the flow path forming surface of the first flow path forming member and the flow path forming surface of the second flow path forming member has a surface roughness parameter RSm of 55 $\mu$m or more.

<6> The flow path forming device according to <1> or <2>, in which at least one of the flow path forming surface of the first flow path forming member and the flow path forming surface of the second flow path forming member has the surface roughness parameter RSm of 200 $\mu$m or less.

<7> The flow path forming device according to <1> or <2>, in which at least one of the flow path forming surface of the first flow path forming member and the flow path forming surface of the second flow path forming member has a surface roughness parameter Ra of 0.8 $\mu$m or more and 6.3 $\mu$m or less.

<8> The flow path forming device according to <1> or <2>, in which at least one of the flow path forming surface of the first flow path forming member and the flow path forming surface of the second flow path forming member has a contact angle with respect to water of 60° or more and 105° or less.

<9> The flow path forming device according to <1> or <2>, in which at least one of the flow path forming surface of the first flow path forming member and the flow path forming surface of the second flow path forming member is hard chrome plated.

<10> The flow path forming device according to <1> or <2>, in which at least one of the flow path forming surface of the first flow path forming member and the flow path forming surface of the second flow path forming member has an HRC hardness of 28 or more.

<11> An extrusion molding device including:

the flow path forming device according to <1> or <2>; and
an extrusion molder configured to cause a plastic composition to pass through the flow path of the flow path forming device and mold the plastic composition by extrusion molding, where the plastic composition contains at least one kind of plastic resin.

<12> The extrusion molding device according to <11>, wherein the extrusion molder includes a kneader configured to knead the plastic composition at a temperature lower than a melting point of the at least one kind of plastic resin and in the presence of a compressible fluid prior to the extrusion molding.

<13> The extrusion molding device according to <11> in which the plastic composition contains 90% by mass or more of a polylactic acid.

According to the flow path forming device according to any of <1> to <10> and the extrusion molding device according to any of <11> to <13>, the present disclosure can achieve the object by solving the various conventional problems.

**Claims**

**1.** A flow path forming device comprising:

a first flow path forming member (10); and
a second flow path forming member (20),
wherein the first flow path forming member (10) and the second flow path forming member (20) form a tubular flow path (30) through which a plastic composition is allowed to pass to mold the plastic composition, and
at least one of a flow path forming surface (40) of the first flow path forming member (10) and a flow path forming surface (50) of the second flow path forming member (20) has a surface roughness parameter Rk of 1.0 μm or more.

2. The flow path forming device according to claim 1, wherein at least one of the flow path forming surface (40) of the first flow path forming member (10) and the flow path forming surface (50) of the second flow path forming member (20) has a surface roughness parameter Rk of 6.3 μm or less.

3. The flow path forming device according to claim 1 or 2, wherein at least one of the flow path forming surface (40) of the first flow path forming member (10) and the flow path forming surface (50) of the second flow path forming member (20) has a surface roughness parameter Rpk of 0.45 μm or more.

4. The flow path forming device according to claim 1 or 2, wherein at least one of the flow path forming surface (40) of the first flow path forming member (10) and the flow path forming surface (50) of the second flow path forming member (20) has a surface roughness parameter Rpk of 6.4 μm or less.

5. The flow path forming device according to claim 1 or 2, wherein at least one of the flow path forming surface (40) of the first flow path forming member (10) and the flow path forming surface (50) of the second flow path forming member (20) has a surface roughness parameter RSm of 55 μm or more.

6. The flow path forming device according to claim 1 or 2, wherein at least one of the flow path forming surface (40) of the first flow path forming member (10) and the flow path forming surface (50) of the second flow path forming member (20) has a surface roughness parameter RSm of 200 μm or less.

7. The flow path forming device according to claim 1 or 2, wherein at least one of the flow path forming surface (40) of the first flow path forming member (10) and the flow path forming surface (50) of the second flow path forming member (20) has a surface roughness parameter Ra of 0.8 μm or more and 6.3 μm or less.

8. The flow path forming device according to claim 1 or 2, wherein at least one of the flow path forming surface (40) of the first flow path forming member (10) and the flow path forming surface (50) of the second flow path forming member (20) has a contact angle with respect to water of 60° or more and 105° or less.

9. The flow path forming device according to claim 1 or 2, wherein at least one of the flow path forming surface (40) of the first flow path forming member (10) and the flow path forming surface (50) of the second flow path forming member (20) is hard chrome plated.

10. The flow path forming device according to claim 1 or 2, wherein at least one of the flow path forming surface (40) of the first flow path forming member (10) and the flow path forming surface (50) of the second flow path forming member (20) has an HRC hardness of 28 or more.

11. An extrusion molding device (120) comprising:

the flow path forming device (5) according to claim 1 or 2; and
an extrusion molder (6) configured to cause a plastic composition to pass through the flow path (30) of the flow path forming device (5) and mold the plastic composition by extrusion molding, the plastic composition containing at least one kind of plastic resin.

12. The extrusion molding device (120) according to claim 11, wherein the extrusion molder (6) includes a kneader (c) configured to knead the plastic composition at a temperature lower than a melting point of the at least one kind of plastic resin and in the presence of a compressible fluid prior to the extrusion molding.

13. The extrusion molding device (120) according to claim 11, wherein the plastic composition contains 90% by mass or more of a polylactic acid.

# FIG. 1

# FIG. 2

COMPRESSIBLE FLUID

PELLET

FIG. 3

# FIG. 4

Europäisches
Patentamt

European
Patent Office

Office européen
des brevets

## EUROPEAN SEARCH REPORT

**Application Number**

EP 23 16 2817

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 4 480600 B2 (SEKISUI PLASTICS) 16 June 2010 (2010-06-16) * paragraph [0036] * * figures 1-4 * | 1,2,9-13 | INV. B29C48/32 B29C48/30 B29C48/09 B29C44/20 |
| A | US 2018/036934 A1 (IWASE YUICHI [JP] ET AL) 8 February 2018 (2018-02-08) * paragraph [0013] * * claims 1-16 * * figures 1-5 * | 3-8 | ADD. B29C44/34 |
| A | JP 2021 134348 A (RICOH CO LTD) 13 September 2021 (2021-09-13) * paragraph [0094] * * figures 1-4 * | 3-8 | |
| A | JP 2010 100881 A (SUMITOMO METAL IND) 6 May 2010 (2010-05-06) * claim 1 * | 3-8 | |

TECHNICAL FIELDS
SEARCHED (IPC)

B29C

The present search report has been drawn up for all claims

| Place of search | Date of completion of the search | Examiner |
|---|---|---|
| Munich | 8 August 2023 | Ngwa, Walters |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 16 2817

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2023

| Patent document cited in search report | | Publication date | Patent family member(s) | | Publication date |
|---|---|---|---|---|---|
| JP 4480600 | B2 | 16-06-2010 | JP | 4480600 B2 | 16-06-2010 |
| | | | JP | 2006224628 A | 31-08-2006 |
| US 2018036934 | A1 | 08-02-2018 | AU | 2016220908 A1 | 24-08-2017 |
| | | | BR | 112017017423 A2 | 03-04-2018 |
| | | | CN | 107428134 A | 01-12-2017 |
| | | | CN | 111531993 A | 14-08-2020 |
| | | | EP | 3260294 A1 | 27-12-2017 |
| | | | JP | 6685993 B2 | 22-04-2020 |
| | | | JP | WO2016133012 A1 | 24-11-2017 |
| | | | KR | 20170117435 A | 23-10-2017 |
| | | | RU | 2017129799 A | 18-03-2019 |
| | | | TW | 201639906 A | 16-11-2016 |
| | | | US | 2018036934 A1 | 08-02-2018 |
| | | | WO | 2016133012 A1 | 25-08-2016 |
| JP 2021134348 | A | 13-09-2021 | NONE | | |
| JP 2010100881 | A | 06-05-2010 | JP | 5169724 B2 | 27-03-2013 |
| | | | JP | 2010100881 A | 06-05-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005246849 A